# EUROPEAN PATENT SPECIFICATION

(11) **EP 3 231 156 B1**
(45) Date of publication and mention of the grant of the patent: **15.04.2020**
(21) Application number: 15837215.1
(22) Date of filing: 11.12.2015
(51) Int. Cl.: H04L 29/06, H04L 12/24, H04L 29/12, H04W 4/00, H04W 8/00, H04L 12/28, H04L 12/46, H04W 76/12, H04W 76/32

(54) **SYSTEMS AND METHODS FOR AUTOMATIC DEVICE DETECTION, DEVICE MANAGEMENT, AND REMOTE ASSISTANCE**
SYSTEME UND VERFAHREN ZUR AUTOMATISCHEN VORRICHTUNGSERKENNUNG, VORRICHTUNGSVERWALTUNG UND FERNUNTERSTÜTZUNG
SYSTÈMES ET PROCÉDÉS DE DÉTECTION AUTOMATIQUE DE DISPOSITIF, DISPOSITIF DE GESTION, ET ASSISTANCE À DISTANCE

(30) Priority: 11.12.2014 US 201462090547 P; 16.06.2015 US 201562180390 P; 11.09.2015 US 201562717310 P
(43) Date of publication of application: 18.10.2017
(73) Proprietor: Bitdefender IPR Management Ltd., 1076 Nicosia (CY)
(72) Inventor: CEBERE, Bogdan-Constantin, Bucuresti (RO); MIRCESCU, Daniel-Alexandru, Bucuresti (RO)
(74) Representative: Tuluca, F. Doina
(86) International application number: PCT/RO2015/050013
(87) International publication number: WO 2016/093724

(56) References cited:
- EP-A1- 2 575 319
- US-A1- 2008 172 476
- US-A1- 2011 122 774
- US-A1- 2011 277 001

## Description

### RELATED APPLICATIONS

This application claims the benefit of the filing date of U.S. provisional patent applications No. 62/090,547, filed on Dec. 11, 2014, entitled "Systems and Methods for Securing Network Endpoints", No. 62/180,390, filed on Jun. 16, 2015, entitled "Systems and Methods for Automatic Device Detection, Device Management, and Remote Assistance", and No. 62/217,310, filed on Sep. 11, 2015, entitled "Systems and Methods for Automatic Network Service Takeover".

### BACKGROUND

The invention relates to systems and methods for securing network endpoints against computer security threats, and to systems and methods for automatic device detection and remote device management.

Malicious software, also known as malware, affects a great number of computer systems worldwide. In its many forms such as computer viruses, exploits, and spyware, malware presents a serious risk to millions of computer users, making them vulnerable to loss of data and sensitive information, to identity theft, and to loss of productivity, among others.

A great variety of devices, informally referred to as the Internet of Things (IoT), are currently being connected to communication networks and the Internet. Such devices include, among others, smartphones, smartwatches, TVs and other multimedia devices, game consoles, home appliances, and various home sensors such as thermostats. As more such devices go online, they become targets for security threats. Therefore, there is an increasing need of securing such devices against malware, as well as of protecting communications to and from such devices. An example of such protection is described in US pre-grant publication No. 2011/122774 A1, by Hassan et al.*,* which shows a router configured to determine whether a secure connection between the router and a remote server has failed, and to subsequently attempt to re-establish the respective connection. Document US2008172476 A1 discloses a method, where a network server takes over DHCP task from a router.

In addition, the proliferation of such intelligent devices in environments such as homes and offices creates an increasing problem of device and network management. When each device uses a distinct configuration interface and requires separate connection settings, managing a large number of such devices may become a burden, especially for a typical home user who is not experienced in network administration. Therefore, there is an increasing interest in developing systems and methods for automatic device detection and configuration, with particular emphasis on security.

### SUMMARY

According to one aspect, a network regulator comprises a hardware processor and a memory, the hardware processor configured, in response to receiving a set of security settings from a remote configuration server, to configure the network regulator according to the security settings, wherein configuring the network regulator according to the security settings causes the network regulator to protect a plurality of client systems against computer security threats, wherein the plurality of client systems are connected to a local network, and wherein a router provides a network service comprising assigning network addresses to the plurality of client systems. The hardware processor is further configured, in response to connecting to the router over the local network, to set up a tunnel connecting the network regulator to the configuration server, wherein setting up the tunnel comprises configuring the network regulator to redirect to the router a communication received via the tunnel, the communication configured to cause a disruption of the network service. The hardware processor is further configured, in response to the disruption, to take over the network service from the router.

According to another aspect, a configuration server comprises at least one hardware processor and a memory, the at least one hardware processor configured to transmit a set of security settings to a network regulator connected to a remote network, wherein configuring the network regulator according to the security settings causes the network regulator to protect a plurality of client systems against computer security threats, wherein the plurality of client systems are connected to the remote network, and wherein a router provides a network service comprising assigning network addresses to the plurality of client systems. The at least one hardware processor is further configured to transmit a communication to the network regulator via a tunnel set up by the network regulator, the tunnel connecting the network regulator to the configuration server, wherein setting up the tunnel comprises configuring the network regulator to redirect the communication to the router, and wherein the communication is configured to cause a disruption of the network service.

According to another aspect, a non-transitory computer-readable medium stores instructions which, when executed by at least one hardware processor of a network regulator, cause the network regulator, in response to receiving a set of security settings from a remote configuration server, to configure the network regulator according to the security settings, wherein configuring the network regulator according to the security settings causes the network regulator to protect a plurality of client systems against computer security threats, wherein the plurality of client systems are connected to a local network, and wherein a router provides a network service comprising assigning network addresses to the plurality of client systems. The instructions further cause the network regulator, in response to connecting to the router over the local network, to set up a tunnel connecting the network regulator to the configuration server, wherein setting up the tunnel comprises configuring the network regulator to redirect to the router a communication received via the tunnel from the configuration server, the communication configured to cause a disruption of the network service. The instructions further cause the network regulator, in response to the disruption, to take over the network service from the router. The invention is disclosed in the appended claims.

### BRIEF DESCRIPTION OF THE DRAWINGS

The foregoing aspects and advantages of the present invention will become better understood upon reading the following detailed description and upon reference to the drawings where:
Fig. **1-A** shows an exemplary configuration of client systems interconnected by a local network, and a network regulator protecting the client systems against computers security threats according to some embodiments of the present invention.
Fig. **1-B** shows alternative configuration of client systems and network regulator according to some embodiments of the present invention.
Fig. **2** shows a set of remote servers collaborating with the network regulator according to some embodiments of the present invention.
Fig. **3** illustrates an exemplary hardware configuration of a client system according to some embodiments of the present invention.
Fig. **4** illustrates an exemplary hardware configuration of a network regulator according to some embodiments of the present invention.
Fig. **5** illustrates an exemplary hardware configuration of an administration device according to some embodiments of the present invention.
Fig. **6** shows a set of exemplary software components executing on a protected client system according to some embodiments of the present invention.
Fig. **7** shows an exemplary set of software components executing on the network regulator according to some embodiments of the present invention.
Fig. **8** illustrates exemplary software executing on the router according to some embodiments of the present invention.
Fig. **9** shows exemplary software executing on the administration device according to some embodiments of the present invention.
Fig. **10** shows an exemplary sequence of steps executed by the network regulator according to some embodiments of the present invention.
Fig. **11** shows an exemplary data exchange between the router, the network regulator, and the configuration server, performed during a network service takeover procedure according to some embodiments of the present invention.
Fig. **12** shows an exemplary sequence of steps performed by the network regulator during a network service takeover procedure, according to some embodiments of the present invention.
Fig. **13** shows an alternative data exchange performed during a network service takeover according to some embodiments of the present invention.
Fig. **14** shows an exemplary sequence of steps performed by the network regulator in collaboration with the configuration server to carry out a network service takeover according to some embodiments of the present invention.
Fig. **15** shows a data exchange between the router, the network regulator, and a client system, performed during another example of network service takeover procedure according to some embodiments of the present invention.
Fig. **16** shows another exemplary sequence of steps performed by the network regulator during a network service takeover procedure, according to some embodiments of the present invention.
Fig. **17** illustrates an exemplary data exchange between a client system, the network regulator and the configuration server, as part of device-specific agent installation.
Fig. **18** illustrates an exemplary sequence of steps performed by the network regulator during an agent installation procedure, according to some embodiments of the present invention.
Fig. **19-A** illustrates an embodiment of the present invention, wherein a part of a network traffic is scanned at the security server according to some embodiments of the present invention.
Fig. **19-B** shows an embodiment of the present invention, wherein a part of a network traffic is scanned by the network regulator according to some embodiments of the present invention.
Fig. **20** shows an exemplary data exchange between a client system, the network regulator and the configuration server as part of configuring a virtual private network (VPN) utility agent and a secure connection for a protected client system, according to some embodiments of the present invention.
Fig. **21** illustrates an exemplary sequence of steps performed by the client system to operate a VPN agent according to some embodiments of the present invention.

### DETAILED DESCRIPTION OF PREFERRED EMBODIMENTS

In the following description, it is understood that all recited connections between structures can be direct operative connections or indirect operative connections through intermediary structures. A set of elements includes one or more elements. Any recitation of an element is understood to refer to at least one element. A plurality of elements includes at least two elements. Unless otherwise required, any described method steps need not be necessarily performed in a particular illustrated order. A first element (e.g. data) derived from a second element encompasses a first element equal to the second element, as well as a first element generated by processing the second element and optionally other data. Making a determination or decision according to a parameter encompasses making the determination or decision according to the parameter and optionally according to other data. Unless otherwise specified, an indicator of some quantity/data may be the quantity/data itself, or an indicator different from the quantity/data itself. Computer security encompasses protecting users and equipment against unintended or unauthorized access to data and/or hardware, against unintended or unauthorized modification of data and/or hardware, and against destruction of data and/or hardware. A computer program is a sequence of processor instructions carrying out a task. Computer programs described in some embodiments of the present invention may be stand-alone software entities or sub-entities (e.g., subroutines, libraries) of other computer programs. Two devices are said to be connected to or to belong to the same local network when their network addresses belong to the same subnet and/or when both have the same broadcast address. A tunnel is a virtual point-to-point connection between two entities connected to a communication network. Computer readable media encompass non-transitory media such as magnetic, optic, and semiconductor storage media (e.g. hard drives, optical disks, flash memory, DRAM), as well as communication links such as conductive cables and fiber optic links. According to some embodiments, the present invention provides, *inter alia,* computer systems comprising hardware (e.g. one or more microprocessors) programmed to perform the methods described herein, as well as computer-readable media encoding instructions to perform the methods described herein.

The following description illustrates embodiments of the invention by way of example and not necessarily by way of limitation:

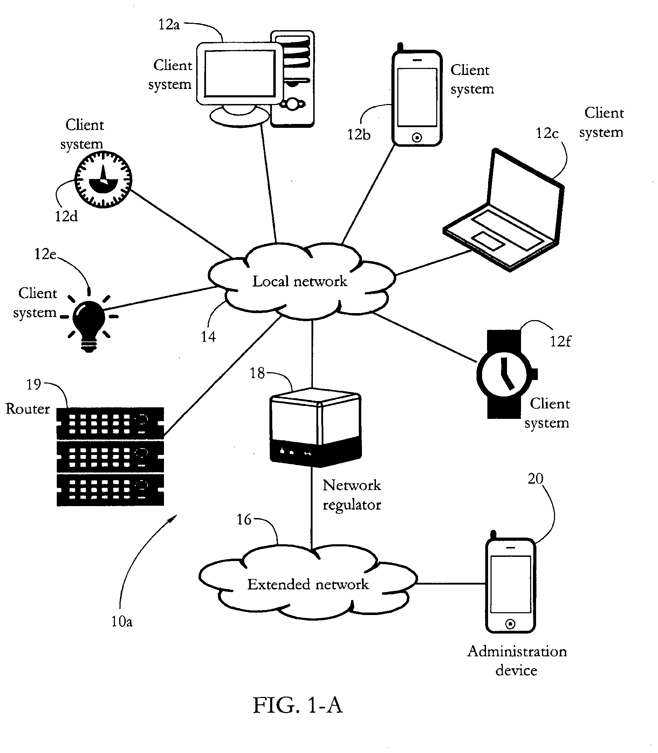

Figs. **1-A-B** show exemplary network configurations **10a-b** according to some embodiments of the present invention, wherein a plurality of client systems **12a-f** are interconnected by a local network 14, and further connected to an extended network **16,** such as the Internet. Client systems **12a-f** may represent any electronic device having a processor, a memory, and a communication interface. Exemplary client systems **12a-f** include personal computers, laptops, tablet computers, mobile telecommunication devices (e.g., smartphones), media players, TVs, game consoles, home appliances (e.g., refrigerators, thermostats, intelligent heating and/or lighting systems), and wearable devices (e.g., smartwatches, sports and fitness equipment), among others. Local network **14** may comprise a local area network (LAN). Exemplary local networks **14** may include a home network and a corporate network, among others.

Router **19** comprises an electronic device enabling communication between client systems **12a-f** and/or access of client systems **12a-f** to extended network **16.** In some embodiments, router **19** acts as a gateway between local network **14** and extended network **16,** and provides a set of network services to client systems **12a-f.** Unless otherwise specified, the term network services is used herein to denote services enabling the inter-communication of client systems **12a-f,** as well as communication between client systems **12a-f** and other entities. Such services may include, for instance, distributing network configuration parameters (e.g., network addresses) to clients systems **12a-f,** and routing communication between participating endpoints. Exemplary network services implement a dynamic host configuration protocol (DHCP).

Figs. **1-A-B** further show a network regulator **18** connected to local network **14.** In some embodiments, network regulator **18** comprises a network appliance configured to perform various services for client systems **12a-f.** Such services include, among others, computer security services (e.g., anti-malware, intrusion detection, anti-spyware, etc.), device management (e.g., remote configuration of client systems **12a-f**), parental control services, secure communication services (e.g., virtual private networking - VPN), and remote technical assistance (e.g., device and/or network troubleshooting).

In a typical application according to some embodiments of the present invention, network regulator **18** is introduced to a local network already configured and managed by router **19.** In some embodiments, at installation, regulator **18** takes over network services such as DHCP from router **19** and installs itself in a gateway position between local network **14** and extended network **16,** so that at least a part of the traffic between client systems **12a-f** and extended network **16** traverses network regulator **18** (see Fig. **1-A**). Placing network regulator **18** in a gateway position may be preferable because, in some embodiments, regulator **18** provides computer security services by redirecting at least some of the traffic (e.g., HTTP requests) from client systems **12a-f** to a security server. Having regulator **18** in a gateway position may facilitate the interception of such traffic.

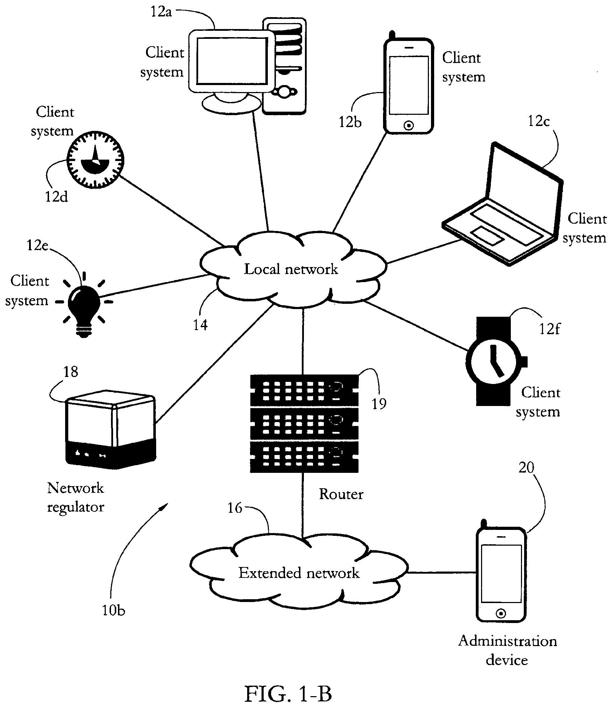

In some embodiments such as the example in Fig. **1-B****,** router **19** may continue to operate as gateway for local network **14** after installation of regulator **18,** but in such cases network regulator **18** is preferably positioned between client systems **12a-f** and the existing gateway (i.e., router **19**), so that regulator **18** belongs to the same local network as client systems **12a-f.** Such a position is preferred because, in some embodiments, network regulator **18** is configured to collaborate with a remote server to detect the type of each client system (e.g., smartphone vs. PC), and in response, to deliver a device-specific utility agent to some of client systems **12a-f.** Configurations wherein regulator **18** is not a member of local network **14** (e.g., placing regulator **18** between router **19** and extended network **16**) may make such device discovery and agent delivery more difficult.

In some embodiments, client systems **12a-f** are monitored, managed, and/or configured remotely by a user/administrator, using software executing on an administration device **20** connected to extended network **16** (e.g., the Internet). Exemplary administration devices **20** include smartphones and personal computer systems, among others. Device **20** may expose a graphical user interface (GUI) allowing a user to remotely configure and/or manage operation of client systems **12a-f,** for instance to set configuration options and/or to receive notifications about events occurring on the respective client systems.

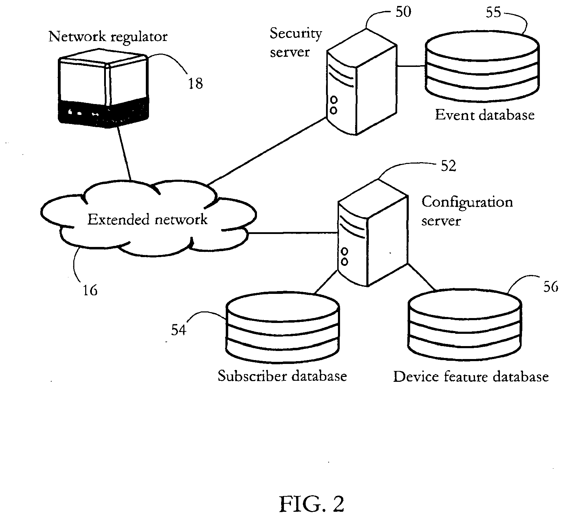

In some embodiments, network regulator **18** may collaborate with a set of remote computer systems in order to perform various services for client systems **12a-f.** Exemplary remote computer systems include a security server **50** and a configuration server **52,** illustrated in Fig. **2****.** Servers **50** and **52** may comprise individual machines, or clusters of multiple interconnected computer systems. In some embodiments, network regulator **18** redirects some or all of the traffic coming to and/or from client systems **12a-f** to security server **50.** Server **50** may then perform threat detection operations (e.g., malware detection, blocking access to malicious or fraudulent websites, intrusion prevention, etc.), to protect client systems **12a-f** against computer security threats. Security server **50** may be further connected to an event database **55** comprising a plurality of security records, each security record including data indicative of a security event, as well as an indicator of an association between the respective event and a protected client system.

One advantage of routing traffic to/from a protected client system through security server **50** is that it allows the respective client system to leave local network **14,** while still benefitting from protection. Such configurations are described in full detail below.

In some embodiments, configuration server **52** collaborates with administration device **20** to configure device management and/or security settings of regulator **18,** router **19,** and/or of a protected client system **12.** Server **52** may be communicatively connected to a subscriber database **54** and to a device feature database **56.** Subscriber database **54** may store a plurality of subscription records, each subscription record indicative of a set of client systems under device management according to some embodiments of the present invention. In one embodiment, each subscription record is uniquely associated with a distinct network regulator **18.** In such embodiments, all client systems **12** configured and/or otherwise serviced using the respective network regulator (e.g., client systems **12a-f** connected to local network **14** in Fig. **1-A**) are associated with the same subscription record. Each subscription record may include an indicator of a subscription period and/or a set of subscription parameters describing, for instance, a desired level of security or a selection of services subscribed for. Subscriptions may be managed according to a service-level agreement (SLA).

In some embodiments, device feature database **56** comprises a set of records indicating configurable features of each client system **12** and/or current configuration settings for each client system. Database **56** may further comprise a comprehensive set of records usable to determine a device type of client system **12.** Such records may include entries corresponding to various device types (e.g., routers, smartphones, wearable devices, etc.), makes, and models, from various manufacturers, using various operating systems (e.g., Windows® vs. Linux®). An exemplary entry may comprise, among others, indicators of whether the respective device type uses a particular network protocol to communicate (e.g., HTTP, Bonjour®), an indicator of a layout of a login interface exposed by the respective device type, etc.

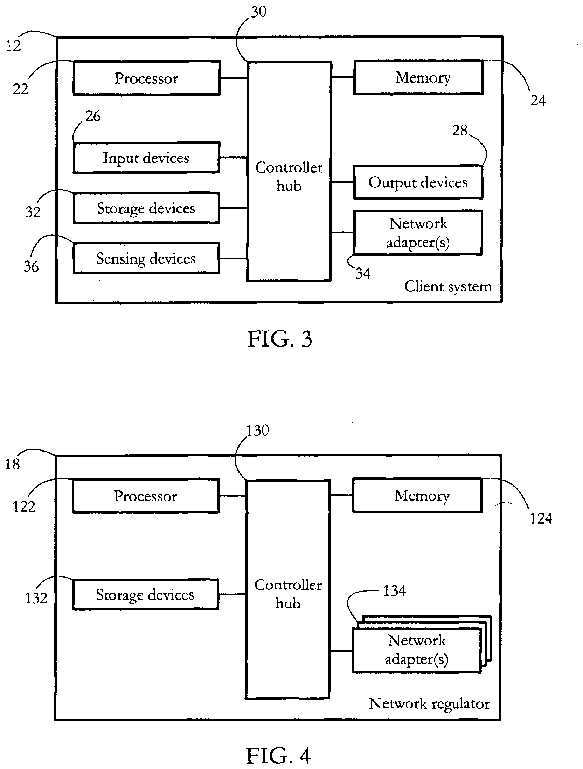

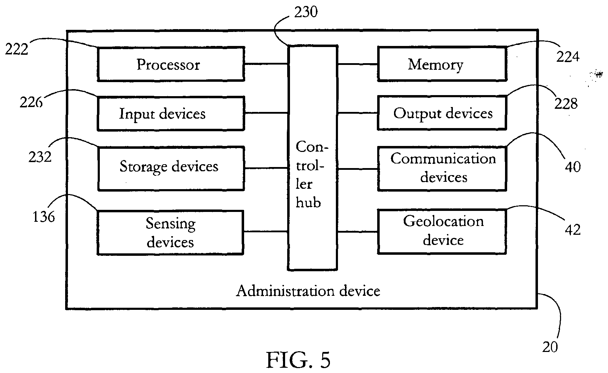

Figs. **3-4-5** show exemplary hardware configurations of client system **12,** network regulator **18,** and administration device **20,** respectively. Without loss of generality, the illustrated configurations correspond to computer systems (Fig. **3-4**) and a smartphone (Fig. **5**). The hardware configuration of other systems (e.g., tablet computers) may differ from the ones illustrated in Figs. **3-4-5****.** Each of processors **22, 122,** and **222** comprises a physical device (e.g. microprocessor, multi-core integrated circuit formed on a semiconductor substrate) configured to execute computational and/or logical operations with a set of signals and/or data. Memory units **24, 124,** and **224** may comprise volatile computer-readable media (e.g. RAM) storing data/signals accessed or generated by processors **22, 122,** and **222,** respectively, in the course of carrying out operations.

Input devices **26, 226** may include computer keyboards, mice, and microphones, among others, including the respective hardware interfaces and/or adapters allowing a user to introduce data and/or instructions into the respective system. Output devices **28, 228** may include display devices such as monitors and speakers among others, as well as hardware interfaces/adapters such as graphic cards, allowing the respective system to communicate data to a user. In some embodiments, input and output devices share a common piece of hardware (e.g., touch-screen). Storage devices **32, 132,** and **232** include computer-readable media enabling the non-volatile storage, reading, and writing of software instructions and/or data. Exemplary storage devices include magnetic and optical disks and flash memory devices, as well as removable media such as CD and/or DVD disks and drives.

Network adapters **34, 134** enable client system **12** and network regulator **18,** respectively, to connect to an electronic communication network such as local network **14,** and/or to other devices/computer systems. Communication devices **40** (Fig. **5**) enable administration device **20** to connect to extended network **16** (e.g., the Internet), and may include telecommunication hardware (electromagnetic wave emitters/receivers, antenna, etc.). Depending on device type and configuration, administration device **20** may further include a geolocation device **42** (e.g. GPS receiver), and a set of sensing devices **136** (e.g., motion sensors, light sensors, etc.).

Controller hubs **30, 130, 230** represent the plurality of system, peripheral, and/or chipset buses, and/or all other circuitry enabling the communication between the processor of each respective system and the rest of the hardware components. In an exemplary client system **12** (Fig. **3**), hub **30** may comprise a memory controller, an input/output (I/O) controller, and an interrupt controller. Depending on hardware manufacturer, some such controllers may be incorporated into a single integrated circuit, and/or may be integrated with the processor.

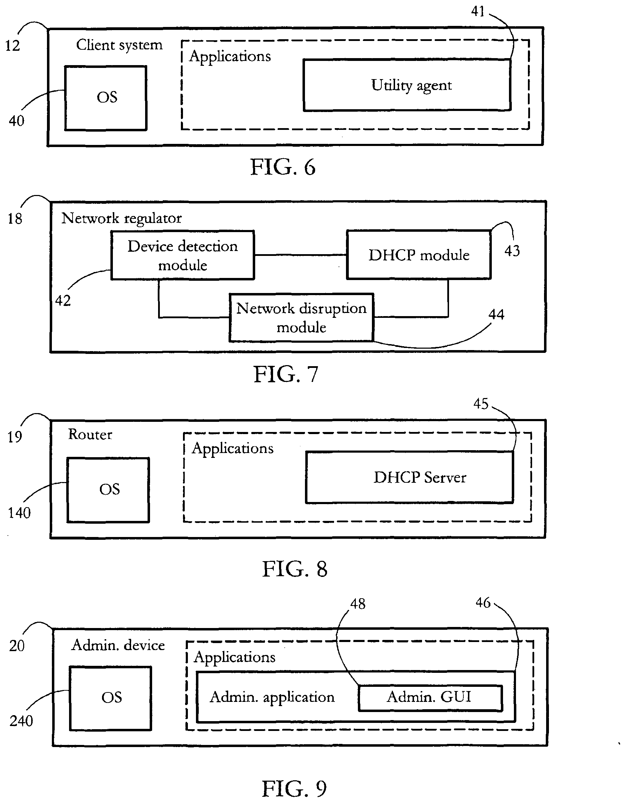

Fig. **6** shows exemplary software components executing on client system **12** according to some embodiments of the present invention. Such software may include an operating system (OS) **40** providing an interface between the hardware of client system **12** and a set of software applications executing on the respective client system. Software applications include a utility agent **41** configured to provide various services to the respective client system, such as security services, device management services, parental control services, secure communication services (e.g., virtual private networking - VPN), etc. In some embodiments, utility agent **41** is configured to access and/or modify a set of configuration options of client system **12** (e.g., network configuration parameters, power management parameters, security parameters, device-specific parameters such as a desired temperature in the case of a remotely controlled thermostat, or a selection of lights in the case of a remotely controlled home lighting manager, etc.). In some embodiments, the installation of agent **41** on client system **12** is initiated and/or facilitated by network regulator **18,** as shown in more detail below.

Fig. **7** shows a set of software components executing on network regulator **18** according to some embodiments of the present invention. Such components may include, among others, a device detection module **42** and a DHCP module **43.** In some embodiments, module **43** provides DHCP services for local network **14.** Such services may include delivering Internet protocol (IP) configuration information to clients requesting access to local network **14** and/or to extended network **16.** Device detection module **42** may be configured to collaborate with a remote configuration server to detect a device type of client system **12,** as shown below. In some embodiments, regulator **18** further executes a network disruption module **44** configured to perform a network service takeover as shown in detail below.

Fig. **8** shows an exemplary set of software components executing on router **19,** according to some embodiments of the present innovation. Such software components may include an operating system **140** and a set of applications, which include a DHCP server **45.** Server **45** may be used to distribute network configuration parameters (e.g., IP addresses) to client systems **12a-f,** in order to set up local network **14.**

Fig. **9** shows an exemplary set of software components executing on administration device **20** (e.g., a smartphone), according to some embodiments of the present invention. Such software components may include an operating system **240** and a set of applications. Applications include an administration application **46** configured to enable a user to remotely configure client systems **12a-f.** Configuring systems **12a-f** may include, among others, configuring client-specific security settings, configuring client-specific network access parameters (e.g., connection speed, etc.) and launching maintenance tasks (e.g., software upgrades, disk cleanup operations, etc.). Administration application **46** may expose an administration graphical user interface (GUI) **48** to a user of administration device **20.**

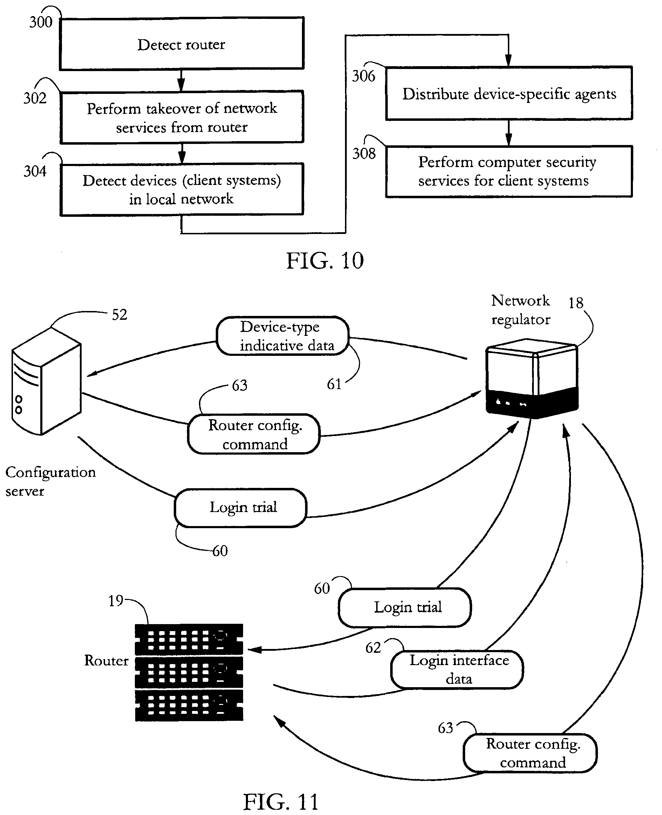

Fig. **10** shows a sequence of steps executed by network regulator **18** according to some embodiments of the present invention. Such a sequence may be executed, for instance, upon installation of network regulator **18,** or when regulator **18** is first introduced to local network **14.** In a step **300,** regulator **18** automatically detects router **19,** herein representing the existing provider of network services. In some embodiments, regulator **18** then takes over some of the network services from router **19.** Such takeover may comprise shutting off or otherwise incapacitating some of the functionality of router **19,** and replacing router **19** as the provider of at least a part of the network services associated with local network **14.** In an alternative embodiment, service takeover may comprise offering an alternative set of network services in addition to those managed by router **19,** without actually incapacitating the latter. In some embodiments, step **302** further comprises installing network regulator **18** in a gateway position between local network **14** and extended network **16,** so that at least a part of network traffic between client systems **12a-f** and extended network **16** traverses regulator **18.**

In a sequence of steps **304-306,** network regulator **18** may automatically detect devices belonging to local network **14** (i.e., client systems **12a-f**), and distribute device-specific utility agents **41** to at least some of client systems **12a-f.** A further step **308** performs a set of computer security services for client systems **12a-f.** Steps **300-308** are described in further detail below.

### NETWORK SERVICE TAKEOVER

In some embodiments of the present invention, DHCP services of router **19** may be turned off or otherwise incapacitated by network regulator **18.** This effect can be obtained through several methods, some of which are exemplified below. DHCP services are used herein just as an example; the systems and methods described below may be adapted to take over other network services.

In one exemplary scenario, known as DHCP starvation, network regulator **18** may use network disruption module **44** to impersonate a plurality of fictitious devices and to request network addresses for each fictitious device from router **19.** The count of such fictitious devices may be chosen so as to completely occupy the available pool of IP addresses offered for lease by DHCP server **45** of router **19.** In this manner, although server **45** continues to operate, server **45** is no longer able to provide IP addresses to client systems on local network **14.** In some embodiments, network regulator **18** may then use DHCP module **43** to broadcast its own DHCP lease offer, effectively forcing client systems **12a-f** to use regulator **18** as the default DHCP server and gateway device for at least part of the traffic between client systems **12a-f** and extended network **16.**

Another exemplary set of methods of DHCP service takeover comprise automatically detecting an existing DHCP service provider (e.g., router **19**) and disabling the respective device, for instance by automatically re-configuring its network and/or other functional parameters. One such scenario involves network regulator **18** collaborating with configuration server **52** in a manner illustrated in Figs. **11-12****.**

In some embodiments, a step **320** requests and then receives permission from a user to re-configure router **19.** The respective user may be an owner or administrator of regulator **18** and/or of local network **14,** as listed, for instance, in subscriber database **54** maintained by configuration server **52** (see Fig. **2**). Obtaining permission may include, for instance, sending a notification to administration device **20,** which may be done by regulator **18** or configuration server **52.** Administration GUI **48** of device **20** may then expose an input field allowing the user to indicate whether he/she allows re-configuring parameters of router **19.** Step **320** may further include obtaining login credentials (e.g., username, password, etc.) for router **19,** either directly from the user via administration device **20,** or from a subscription record stored in database **54.**

In a step **322,** network regulator **18** gathers device-type indicative information about router **19,** for instance by analyzing data received from router **19** during a DHCP request/response exchange. Such data may include, among others, a media access control (MAC) address of router **19** and an authentication header. In some embodiments, network regulator **18** may further attempt to expose a login interface of router **19,** and further extract device-type-indicative data from the respective interface (for instance, determine whether the interface is a HTML document or not, and determine a network address of the respective interface). Some embodiments of regulator **18** may even extract certain visual features of the respective interface, for instance by using an image-processing algorithm.

Device-type indicative data **61** is then sent to configuration server **52** (step **324**), which may identify a device type of router **19** (e.g. manufacturer, model, family, subfamily, firmware version, etc.) according to such data and/or according to data stored in device feature database **56** (Fig. **2**). Configuration server **52** may then configure a login trial **60** tailored for the particular device type of router **19** according to device-type-indicative data received from regulator **18,** and may transmit login trial data to regulator **18.**

In some embodiments, network regulator **18** may repeat a loop of steps **326-334** in an iterative trial-and-error attempt to log into router **19.** Steps **328-330** may expose the login interface of router **19** and transmit login trial data **60** and/or user credentials to router **19.** An indicator of whether login was successful is sent back to server **52** (step **332**); the success indicator may be used to further identify a device type of router **19.**

Once a successful login was achieved, in a step **336,** network regulator **18** may obtain a set of router configuration commands **63** from configuration server **52,** commands **63** crafted specifically according to the identified type of router and aimed at incapacitating router **19,** or at least some network services offered by router **19.** Exemplary router configuration commands **63** may instruct router **19** to shut down, to restart, to expose a configuration interface, and to change a configuration setting, among others. Another exemplary configuration command **63** comprises a HTTP request configured to expose a configuration interface of router **19.** In some embodiments, commands **63** may automatically fill in a set of fields of the exposed interface. In some embodiments, commands **63** comprise a set of parameter values for filling in a set of fields of a configuration interface of router **19.**

In a step **338,** network regulator **18** may transmit configuration commands **63** to router **19.** To complete the takeover of DHCP services from router **19,** regulator **18** may employ DHCP module **43** (Fig. **7**) to broadcast its own DHCP lease offer to client systems **12a-f.**

In some embodiments, network regulator **18** may transmit another set of commands to router **19** in the event when the owner/administrator of regulator **18** decides to uninstall regulator **18.** In one such example, regulator **18** may instruct router **19** to revert to settings, which were effective before installation of network regulator **18.**

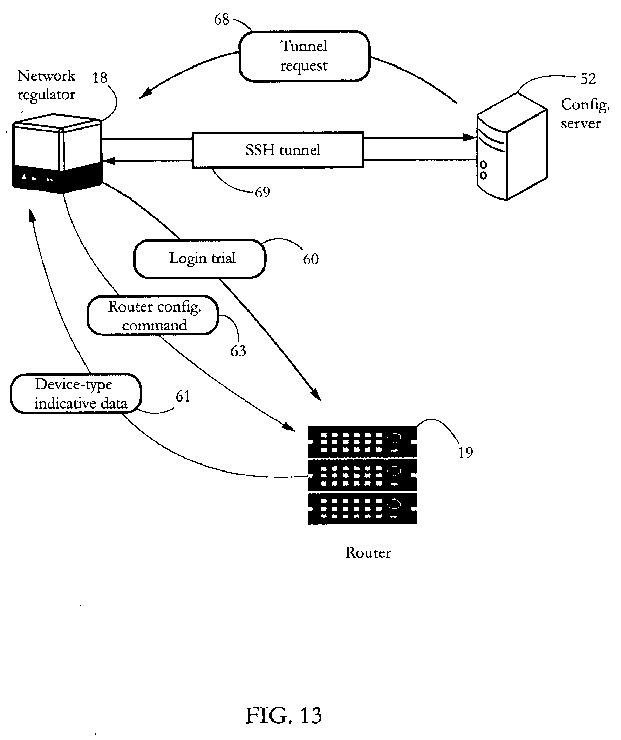

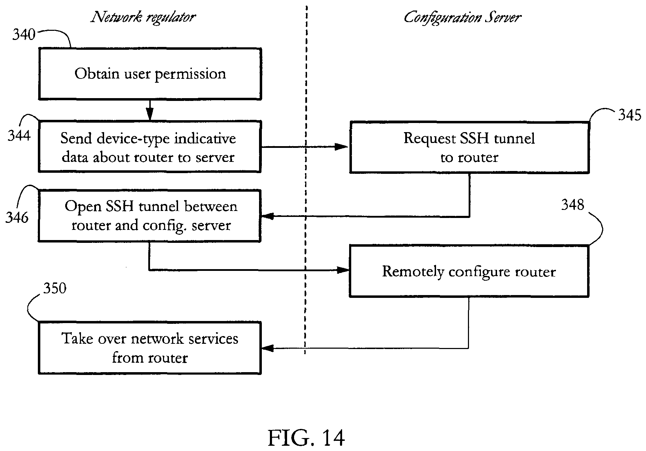

Figs **13-14** illustrate an alternative method of network service takeover by network regulator **18** according to some embodiments of the present invention. The illustrated method comprises a variation to the method described above in relation to Figs. **11-12****.** Instead of employing network regulator **18** to actively re-configure network settings and/or to (partially) disable router **19,** in the method illustrated in Figs. **13-14****,** such actions are performed directly by configuration server **52,** while regulator **18** is used as a proxy or relay. Some embodiments conduct remote configuration of router **19** using tunnels, i.e., point-to-point secure connections/communication channels.

In response to installation within local network **14,** network regulator **18** may transmit a registration message to servers **50-52,** including unique identifying indicators for the respective network regulator, router **19,** and client systems connected to the respective local network. Thus, servers **50-52** may selectively identify each individual device and associate each client system **12** and router **19** with a subscription and/or with a respective network regulator. This process of registration with configuration server **52** allows server **52** to accept tunnel connections from regulator **18.**

In response to obtaining permission from the user to re-configure the local network (step **340**), network regulator **18** may open a communication tunnel **69** connecting regulator **18** to server **52.** An exemplary tunnel comprises a secure shell (SSH) tunnel, i.e., a tunnel set up using a version of the SSH protocol. In some embodiments, network regulator **18** employs a port forwarding strategy to redirect network traffic received via tunnel **69** onto router **19,** and/or redirect communications received from router **19** onto server **52** via tunnel **69.** Such port forwarding may be achieved using any method known in the art of networking, for instance using proxying, a SOCKS client, network address translation (NAT), etc.

By using port forwarding, some embodiments of configuration server **52** may thus remotely configure router **19** via tunnel **69.** Such remote configuration may include some of the operations described above in relation to Figs. **11-12****,** such as determining a device type of router **19,** sending configuration commands to router **19,** etc.

In response to determining a device type of router **19,** server **52** may send a tunnel request **68** to regulator **18,** the tunnel request instructing network regulator **18** to set up tunnel **69** (step **346**). The tunnel may be configured with port forwarding, so that a communication sent by server **52** to regulator **18** will be forwarded onto router **19.** In a step **348,** server **52** may then transmit login data and/or router configuration commands over tunnel **69** to instruct router **19** to disable or otherwise re-configure DHCP services of router **19.**

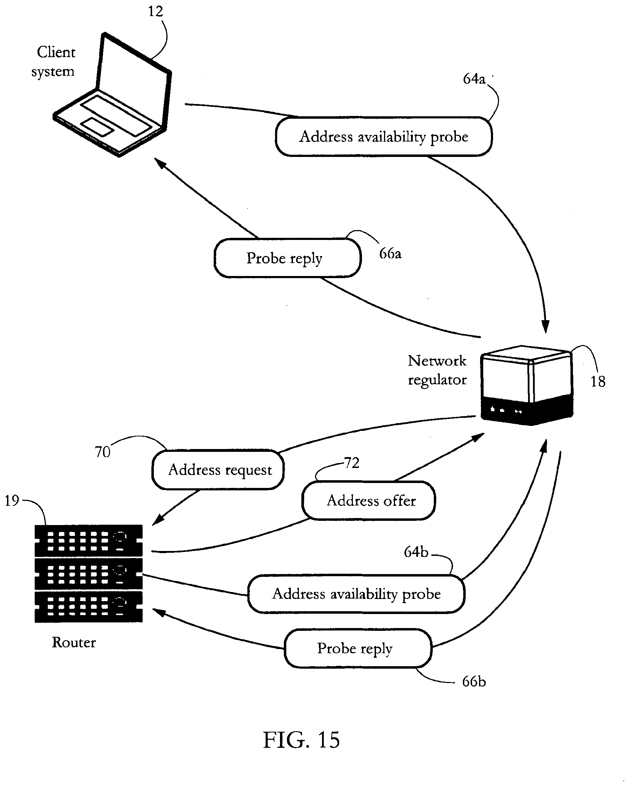

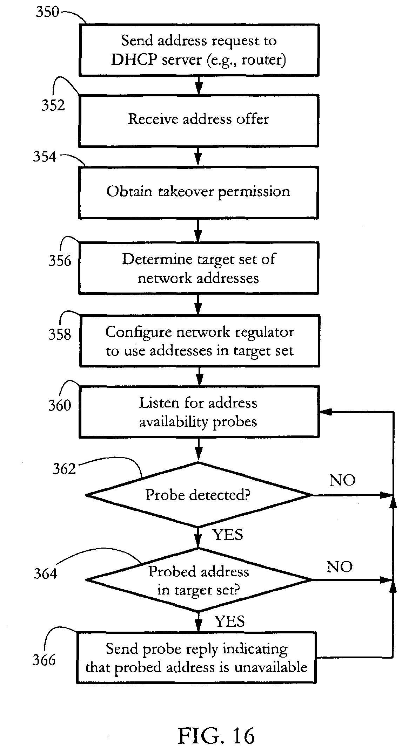

Figs. **15-16** illustrate yet another method of taking over network services from router **19** according to some embodiments of the present invention. When introduced to local network **14,** regulator **18** may send an address request **70** to the current network service provider (e.g., router **19**), requesting a network address (step **350**). In response, router **19** may return an address offer **72** to regulator **18.** Request **70** and return **72** may form part of a standard address assignment protocol, for instance, DHCP. Step **352** may further comprise accepting address offer **72** and configuring network regulator **18** to use the respective network address and/or other network parameters (e.g., gateway, DNS server, etc.).

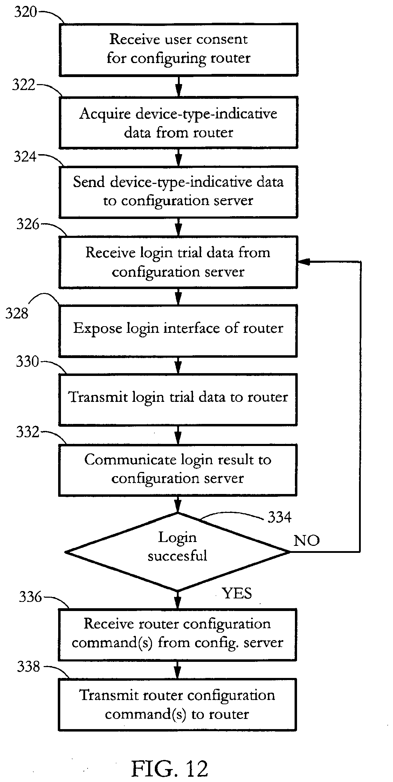

Next, in a step **354,** regulator **18** may obtain permission of a human operator to perform the network service takeover procedure (see above, in relation to Fig. **12**). In response to obtaining permission, in a step **356,** network regulator **18** may determine a target set of network addresses according to parameters of the previously received address offer **72.** In some embodiments using DHCP, offer **72** comprises an indicator of a pool of addresses (e.g., a range of address values) managed by and/or available for assignment by the current network service provider. Regulator **18** may select the target set of network addresses from the respective pool of addresses. In some embodiments, the target set includes all addresses of the pool. In other embodiments, the target set includes all addresses of the pool, except the address currently assigned to router **19.**

A step **358** may configure network regulator **18** to use all addresses of the target set. In some embodiments, step **358** comprises creating a set of fictitious devices (aliases), and assigning a subset of the target set of network addresses to each such fictitious device. Next, in a sequence of steps **360-366,** network regulator **18** may exploit an address conflict detection (ACD) mechanism to progressively force clients **12a-f** to relinquish their currently assigned network addresses. In the meantime, regulator **18** may use DHCP module **36** to offer a new set of network addresses and/or other configuration parameters to client systems **12a-f,** thus completing the network service takeover procedure.

An exemplary ACD mechanism is described in the IPv4 Address Conflict Detection Request for Comments (RFC5227) issued by the Network Working Group of Apple®, Inc., in July 2008. The described ACD mechanism requires that, as part of network address assignment (occurring, for instance, upon the initial offer to lease a network address, or upon lease renewal for the respective network address), each client and/or their respective network service provider verify whether the respective network address is available, i.e., not already in use by another device. Such verifications may use tools and/or mechanisms described in the Address Resolution Protocol (ARP) and Neighbor Discovery Protocol (NDP), among others. An exemplary verification comprises the respective client and/or provider sending out a probe (e.g., a specially configured network packet, a ping, an arping, etc.) to the network address currently being verified. When the client and/or provider that sent out the probe receives no reply to the respective probe, the respective address is considered available and may be (re)assigned to the respective client. In contrast, when client and/or provider receives a reply to the respective probe, the respective address is considered to be taken and is no longer (re)assigned to the respective client.

The ACD mechanism described above is exploited by some embodiments of network regulator **18** for takeover purposes, as shown in Figs. **15-16****.** In a sequence of steps **360-362,** regulator **18** may listen for address availability probes **64a-b,** issued by client system **12** and/or router **19,** respectively. In response to detecting such a probe, a step **364** determines whether the probed address matches any member of the target set of network addresses determined in step **356.** When no, regulator **18** returns to listening for address availability probes.

When the probed address matches a member of the target set of addresses, in a step **366,** regulator **18** may return a probe reply **66a-b** to the sender of the respective probe, the probe reply configured to indicate that the respective network address is not available. In some embodiments, step **366** comprises a fictitious device (alias) created by network regulator **18** issuing a probe reply configured with the details of the respective fictitious device. When client system **12** is configured to support conflict detection, receiving such a return probe may determine client system **12** to stop using the respective network address and request a new address. Such new requests will fail for all addresses in the target set of addresses, because they will trigger a re-run of steps **360-366.** By repeating the sequence of steps **360-366** for each client system **12a-f,** network regulator **18** may thus progressively disable network services offered by router **19** and force client systems **12a-f** to use a new set of network addresses issued by regulator **18.**

### AUTOMATIC DEVICE DISCOVERY AND AGENT PROVISIONING

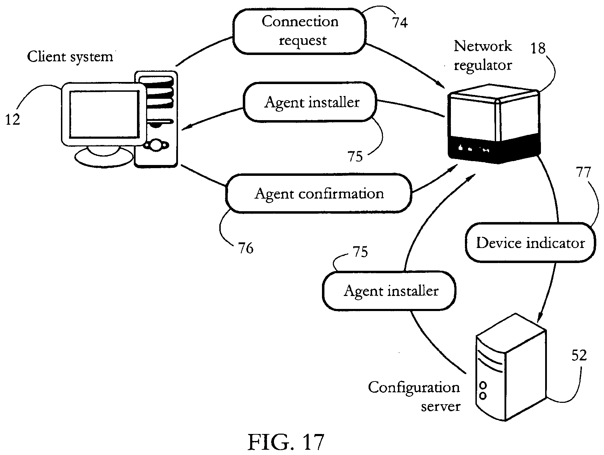

Having installed itself as gateway and/or provider of network services for local network **14,** network regulator **18** may proceed to distribute utility agents **41** (e.g., Fig. **6**) to client systems **12a-f** connected to local network **14.** Fig. **17** shows an exemplary data exchange between client system **12,** network regulator **18,** and client configuration server **52** according to some embodiments of the present invention, the exchange occurring during device discovery and agent provisioning. Such exchanges may occur upon installation of network regulator **18,** as well as when a new client system is first introduced to local network **14.**

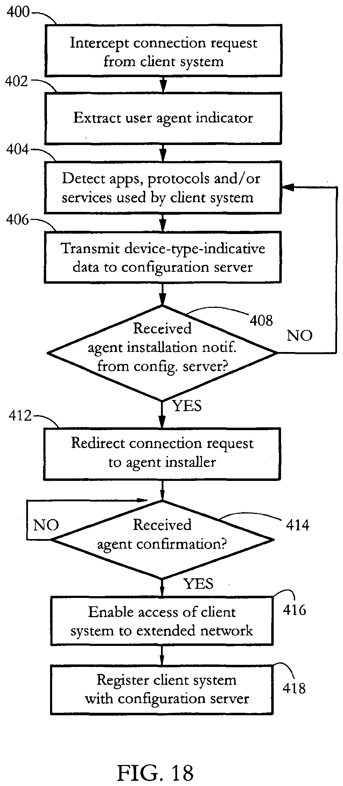

An exemplary sequence of steps performed by network regulator **18** to deliver a device-specific utility agent is illustrated in Fig. **18****.** In some embodiments, regulator **18** may wait for connection requests from local client systems (step **400**). An exemplary connection request comprises a HTTP request. When client system **12** attempts to access an address on extended network **16,** regulator **18** may force the respective client system to install utility agent **41.** In some embodiments, regulator **18** may redirect the current network access request to configuration server **52,** which may serve an agent installer **75** to the respective client system (Fig. **17**). In an alternative embodiment, regulator **18** may obtain agent installer **75** from server **52,** and then push installer **75** to the respective client system.

In some embodiments, installer **75** is configured to determine client system **12** (or administration device **20**) to expose a confirmation interface to a user, requesting the user to agree to install agent **41.** Installer **75** may further request the user to confirm that the user agrees with terms of the respective subscription (e.g. as listed in a SLA). When the user indicates agreement, installer **75** may install and execute agent **41.** In some embodiments, installer **75** and/or network regulator **18** may register the respective client system with client configuration server **52** (step **418** in Fig. **18**). Such registration may include server **52** associating the respective client system with a subscription record attached to network regulator **18.**

Considering the great diversity of devices currently being connected to communication networks and the Internet, it may be preferable that utility agents **41** delivered to protected client systems **12a-f** be tailored to the device type of each client system (e.g., smartphone, tablet, smartwatch, running Windows® OS or iOS®, etc.). Exemplary steps **400-406** (Fig. **18**) illustrate an exemplary method of determining a device type of client system **12.** Network regulator **18** may obtain device-type-indicative data by extracting a user agent indicator from a HTTP request (the user agent indicator typically contains information about both the browser type and operating system of the HTTP request sender). Regulator **18** may further detect a set of applications, protocols and/or services used by the respective client systems, for instance by scanning for the respective services and/or protocols (step **404**). Such scanning may include sending a probe out to a particular port of the respective client system, and listen for a response. Detected protocols and services may include, among others, Bonjour®, Simple Network Management Protocol (SNMP), and Network mapper (Nmap). Network regulator **18** may then determine a device type of client system **12** locally, according to such device-type-indicative data, using a set of rules, a decision tree, and/or a machine-learning algorithm. In an alternative embodiment, device-type indicative data is sent to configuration server **52** (step **406**), which identifies the device type according to the received data and according to information stored in device feature database **56.** For instance, server **52** may try to match features of client system **12** to various entries of database **56,** wherein each such entry may correspond to a distinct device type (possibly including distinct versions of a product, distinct operating systems, etc.). Device discovery may proceed in an iterative fashion: server **52** may perform a preliminary determination of a device type according to the available information about the client system. In response to the preliminary determination, server **52** may request further device-type-indicative data about the client system from network regulator **18.** Progressively more device-type-indicative data is sent to configuration server **52,** until a positive identification of the device type of client system **12** is achieved. When the device type was successfully identified, server **52** may send a notification to regulator **18.** In response to receiving the notification (step **408**), regulator **18** may redirect the network connection request intercepted in step **400** to an agent installer application.

An alternative device discovery and/or agent provisioning scenario may involve tunneling, in the manner similar to the one described above in relation to the automatic detection of router **19** (Figs. **13-14**)**.** In one such example, regulator **18** opens a communication tunnel (e.g., an SSH tunnel) connecting regulator **18** with server **52.** The respective tunnel may be configured with port forwarding, so that communications received from server **52** are redirected by network regulator **18** to the respective client system **12.** Server **52** may then directly deliver an agent installer to client system **12** via the tunnel, and may further instruct client system **12** to install the respective agent. Server **52** may also use the SSH tunnel to obtain device-type-indicative information from client system **12,** using any of the methods described above.

A broad variety of utility agents may be provisioned using systems and methods described herein. An exemplary utility agent **41** configured to provide security services may perform a security assessment of client system **12** (e.g., a local malware scan) and may send security assessment data to configuration server **52** or security server **50.** The server(s) may then forward a security indicator to administration device **20** for display to the user/administrator. Exemplary security indicators displayed to the user/administrator may include, among others, an indicator of whether a particular software object (e.g., the operating system) executing on client system **12** is up to date, and an indicator of a strength of a password used to protect client system **12.** Other exemplary actions performed by a security agent include updating software and/or security policies for the respective client system. In some embodiments, agent **41** is configured to filter network traffic to/from client system **12** using a network packet inspection algorithm to determine, for instance, whether client system **12** is subject to a malicious attack. Additional functionality of a utility agent providing computer security services is detailed below.

An exemplary utility agent **41** configured to provide secure communication services includes a virtual private network (VPN) agent. Such agents may protect client system **12** when client system **12** leaves local network **14** (for instance, when the user leaves home with his/her mobile telephone). Such an agent may collaborate with network regulator **18** and/or configuration server **52** to open a secure communication tunnel and/or to set up a VPN between the respective client system and security server **50** (more details below).

An exemplary utility agent **41** configured to provide parental control services may monitor the usage of client system **12,** and report usage patterns to a supervisor user (e.g., parent) via administration device **20**. Agent **41** may further prevent client system **12** from accessing certain remote resources (e.g., IP addresses, websites, etc.), or from using certain locally-installed applications (e.g., games). Such blocking may be enforced permanently, or according to a user specific schedule.

An exemplary utility agent **41** configured to provide remote technical assistance may automatically configure and/or open a secure communication channel (e.g., an SSH tunnel) between client system **12** and configuration server **52.** Configuration and/or troubleshooting commands may then be transmitted from server **52** to client system **12,** possibly without explicit involvement or assistance from a user of client system **12.**

Some client systems, such as home appliances, wearable devices, etc., may not be capable of installing a utility agent as indicated above. However, such devices may include built-in configuration and/or device management agents enabling a remote command of the respective devices. Some embodiments of the present invention may use the existing management agents and device-specific protocols and/or communication methods to communicate parameter value updates to such devices. Even for such devices, correctly identifying the device type enables configuration server **52** to properly format and communicate configuration commands to the respective client systems. To facilitate determination of the device type of such client systems, network regulator **18** may either actively parse communications received from the respective client system, or re-route the respective communications to configuration server **52.**

In some embodiments, network regulator **18** may condition access of client system **12** to extended network **16** upon a successful installation of utility agent **41.** As illustrated by step **416** in Fig. **18****,** some embodiments may allow client system to access extended network **16** only in response to agent installation. Such configurations may improve security of client system **12** and/or of local network **14.**

### DEVICE MANAGEMENT

Once utility agents **41** are functional, they may be used to perform various device management tasks, for instance to remotely configure the respective client systems **12a-f.** Exemplary configuration tasks include, among others, turning a client system on or off (e.g., arming or disarming a home security system, turning lights on and off), setting a value of a functional parameter of a client system (e.g., setting a desired temperature on a smart thermostat), configuring network and/or security features (e.g., blocking or allowing access of certain client systems to network **14,** configuring firewall parameters, configuring parental control applications and/or features), performing software updates for components executing on the respective client system, and performing technical assistance/troubleshooting tasks in relation to the respective client system.

In some embodiments, a user/administrator may remotely manage client system **12** via administration GUI **48** exposed by administration device **20** (e.g., a smartphone running an administration application). Following registration of network regulator **18** with configuration server **52,** server **52** may uniquely associate regulator **18** and administration device **20** with a subscription. The respective subscription also allows uniquely associating regulator **18** with the set of client systems **12a-f** protected by the respective network regulator. Therefore, the user of administration device **20** may be able to select a specific client system to remotely manage from administration GUI **48,** with the assistance of configuration server **52.** The actual device management (e.g., setting parameter values) may comprise transmitting data and/or configuration commands between administration device **20** and the respective client system.

In some embodiments, transmission of configuration data/commands to a target client system uses a variation of the systems and methods described above, in relation to configuring router **19** (Figs. **13-14**) and to device discovery. In response to receiving a device management request from administration device **20,** server **52** may send a notification to network regulator **18,** the notification causing regulator **18** and/or the target client system to open a communication tunnel (e.g., SSH tunnel) between server **52** and regulator **18** and/or between server **52** and the target client system. The tunnel may be configured with port forwarding as described above. Such a tunnel may then be used to transmit configuration commands from server **52** to the target client system, the respective commands crafted, for instance, to change configuration settings of the respective client system. In some embodiments, such configuration commands are executed by utility agent **41.** When the targeted client system lacks a utility agent or cannot install such an agent, configuration commands are aimed at the native management software of the respective device.

In one exemplary application, a user may request technical assistance/troubleshooting of a particular target client system using methods described above. Technical assistance may then proceed automatically, without further involvement of the respective user. As part of troubleshooting, some embodiments of server **52** may determine the target client system to install a dedicated utility agent configured to solve a particular technical problem.

### COMPUTER SECURITY PROTECTION

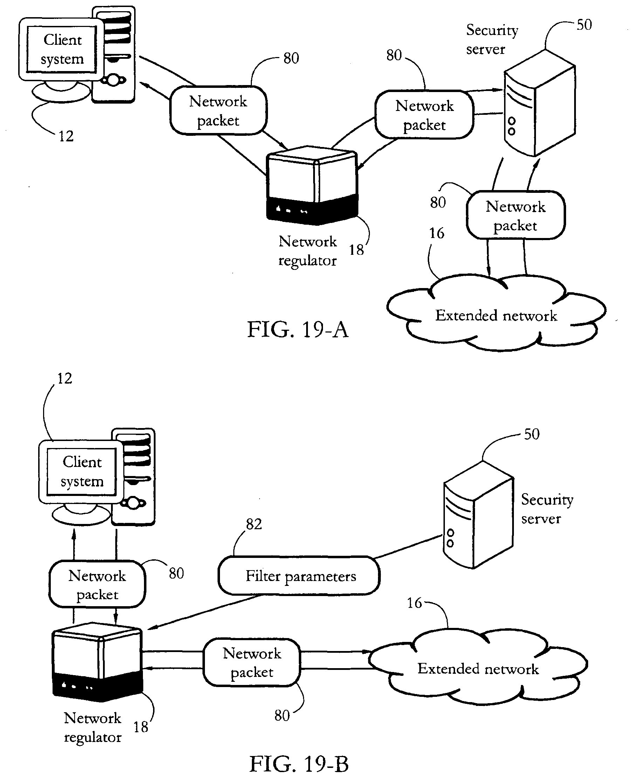

Figs. **19-A-B** show exemplary embodiments wherein network regulator **18** collaborates with security server **50** to protect client systems **12a-f** from computer security threats such as malware, adware, spyware, and network intrusion. In the embodiment of Fig. **19-A****,** network regulator **18** re-routes some or all of the data traffic (herein illustrated by network packet **80**) between protected client system **12** and a computer system external to the local network through security server **50.** Such re-routing may be achieved, for instance, by installing network regulator **18** as gateway between local network **14** and extended network **16,** and using regulator **18** to intercept network traffic and actively redirect it to server **50.** In embodiments as illustrated in Fig. **19-A****,** threat detection is performed by security server **50**, using any method known in the art (e.g., by analyzing network packets **80** to determine whether they contain malware, or whether they are indicative of a network intrusion).

In some embodiments, as illustrated in Fig. **19-B****,** threat detection is performed by network regulator **18.** Such local detection may comprise, for instance, filtering packet content. Regulator **18** may keep malware detection algorithms up to date by downloading a set of filter parameters **82** (e.g. malware-indicative signatures) from security server **50.** Some embodiments may combine threat detection on regulator **18** with threat detection at security server **50.** In one such example, network regulator **18** may carry out a preliminary analysis of data traffic, using, for instance, relatively inexpensive methods. Regulator **18** may then send suspect network packets for further analysis to server **50.**

Re-routing traffic through security server **50** (Fig. **19-A**) may have several advantages over performing a local security analysis (Fig. **19-B**). Server **50** may comprise multiple purpose-built, high-throughput computer systems, and may therefore be able to carry out computationally intensive traffic analysis, such as deep packet inspection, much more efficiently than regulator **18.** Installing such capabilities in network regulator **18** would substantially increase the price, complexity, and attack surface of regulator **18.** Another advantage of having centralized data analysis is that such configurations eliminate the need to distribute updates of malware-identifying signatures and of other data used in network packet analysis to a large number of distributed network regulators **18.** Centralized security systems are also typically better equipped to respond to newly discovered threats.

An exemplary application of such computer security systems and methods comprises blocking access of a protected client system to malicious or fraudulent webpages. In one such example, a request to access a remote resource (e.g., a HTTP request from a protected client system) is intercepted and analyzed to determine whether access to the remote resource, webpage, etc., represents a computer security risk. Such analysis may use any method known in the art, for instance matching an address of the respective resource against a blacklist of known malicious or fraudulent webpages, analyzing the layout of the respective webpage, etc. The analysis may be carried out at security server **50** (e.g., in a configuration as shown in Fig. **19-A**) or at network regulator **18** (e.g., as shown in Fig. **19-B**). When the analysis establishes that accessing the remote resource does not amount to a computer security risk, the respective client system is allowed access to the respective remote resource. When access is deemed risky, the requesting client system may be blocked from accessing the respective resource. In addition to blocking access, some embodiments of security server **50** send an event notification to administration device **20,** informing the user/administrator of network regulator **18** that a security event has occurred. The notification may include an indicator of the client system involved in the respective event, and an indicator of a type of event (e.g., access to a fraudulent website).

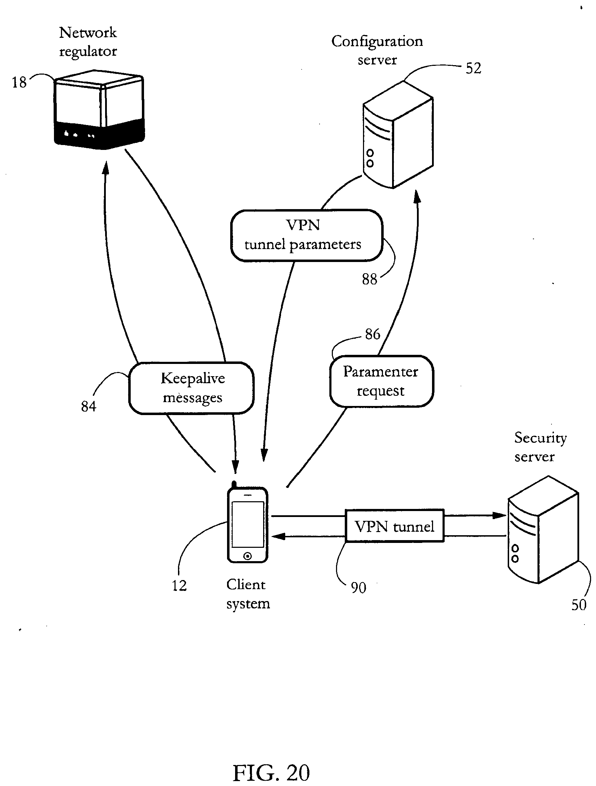

Another exemplary application of a computer security system according to some embodiments of the present invention is illustrated in Figs. **20-21****.** As shown above, a client system may be protected against computer security threats while connected to network regulator **18** over local network **14.** Leaving network **14** (as happens, for instance, when a user leaves home with his/her mobile phone) may however expose the respective client system to various security risks. Some embodiments ensure that, once registered for protection with regulator **18** and configuration server **52,** the respective client system is protected at all times.

To achieve such protection, some embodiments install a utility agent **41** on the respective client system (e.g., mobile phone, tablet computer), utility agent **41** configured to manage a virtual private network (VPN) connecting the respective client system with security server **50.** When the respective client system has a built-in VPN agent, some embodiments may opt for configuring the existing VPN agent, instead of installing utility agent **41.** A VPN connection (tunnel) to security server **50** may be initiated, for instance, when the respective client system leaves local network **14.** By maintaining a connection with security server **50** even when away from local network **14,** some embodiments may continue to use computer security methods described above (e.g., to re-route traffic via security server **50**) to protect the respective client system.

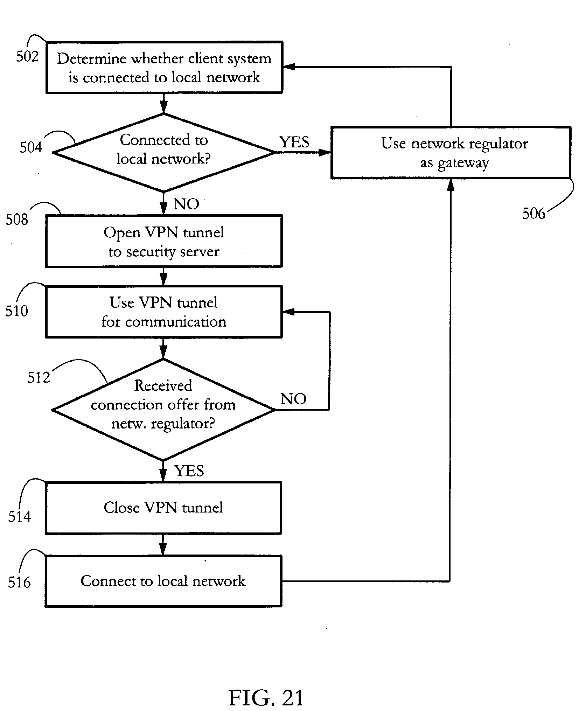

Fig. **20** shows an exemplary data exchange between client system **12,** network regulator **18,** and configuration server **52,** the exchange occurring as part of operating a VPN utility agent and an associated secure connection with security server **50.** Fig. **21** shows an exemplary sequence of steps performed by client system **12** operating the VPN utility agent according to some embodiments of the present invention.

The VPN utility agent executing on client system **12** may obtain connection parameters **88** for establishing a VPN tunnel with security server **50** from configuration server **52.** Such parameters may be tailored to the device type of client system **12,** as discussed above. In some embodiments, a sequence of steps **502-504** determines whether client system **12** is currently part of local network **14** (i.e., the local network serviced by network regulator **18**). Step **502** may proceed according to any method known in the art, for instance, by maintaining a stream of keepalive messages **84** between regulator **18** and the respective client system. While client system **12** remains connected to local network **14,** client system **12** may use regulator **18** as gateway for accessing external network **16,** being protected against computer security threats according to methods described above.

When client system **12** detects that it is no longer connected to local network 14, in a step **510,** the VPN agent executing on client system **12** may open a VPN tunnel **90** to security server **50**, configuring tunnel **90** according to VPN parameters **88.** Client system **12** may thereafter use VPN tunnel **90** for communication such as Internet browsing, messaging, etc. In an alternative embodiments, network regulator **18** may determine that client system **12** has left local network **14,** and in response, notify security server **50.** Establishing tunnel **90** may then be initiated by server **50.**

When client system **12** returns to the proximity of network regulator **18** (for instance, when the user returns home with his/her mobile phone), client system **12** may detect an offer of network services (e.g., a DHCP offer) from network regulator **18.** When receiving such an offer to connect to local network **14,** in a sequence of steps **514-516,** the VPN utility agent executing on the respective client system may close VPN tunnel **90** and connect to local network **14.**

The exemplary systems and methods described herein allow protecting a plurality of client systems against computer security threats, such as malicious software and network intrusion. Besides protecting conventional computer systems, the described systems and methods are particularly suited for protecting a diverse ecosystem of intelligent devices connected to the Internet, such as devices collectively known in popular culture as the Internet of Things (IoT). Examples of such devices include, among others, wearable devices (e.g., smartwatches, fitness bands, interactive jewelry), home entertainment devices (TVs, media players, game consoles), home appliances (refrigerators, thermostats, intelligent lighting systems, home security systems). Some embodiments allow, for instance, protecting all electronic devices in a home using a unified, integrated solution.

Some embodiments include a network regulator configured to set up and manage a local network interconnecting the plurality of protected client systems. The network regulator may install itself in a position of gateway between the local network and an extended network such as the Internet. In some embodiments, protection is achieved by the network regulator re-routing at least a part of data traffic exchanged between a protected client system and an entity outside the local network through a remote security server. The traffic may then be scanned for malware, and access to risky resources (e.g., malicious or fraudulent websites) blocked.

Some embodiments ensure that protection against computer security threats continues even when the respective client system leaves the local network. For instance, when a user leaves home with his/her mobile phone, the phone retains protection. In some embodiments, such protection is achieved by automatically detecting that a protected client system has left the local network, and in response, automatically activating a tunnel (e.g., a point-to-point VPN connection) to the security server, tunnel which is used to carry data traffic to/from the respective device while the device is away from the local network.

In some embodiments, the network regulator is uniquely associated with a service subscription, which allows a unified management of security and other aspects for all protected client systems, e.g., for all intelligent devices within a home. A security event, such as an attempt by a protected client system to access a fraudulent website, may thus be automatically associated with a subscription account, and reported to a contact person/administrator of the respective account. Reporting of security events may comprise sending a notification to an administration device (e.g., mobile phone) of the administrator. In some embodiments, such notifications are centralized by the security server and grouped per user and/or per device. A graphical user interface (GUI) executing on the administration device may display information about each security event, statistical data, etc. Some embodiments of the present invention therefore allow a centralized solution for managing computer security for a large number of customers/accounts, each such account associated with its own diverse group of devices.

Aside from ensuring protection of client systems connected to the local network, some embodiments provide a unified solution for automatic configuration, troubleshooting/technical assistance, and remote management of the protected client systems. Some embodiments install a utility agent on each protected device, the utility agent collaborating with remote servers to receive configuration data and/or executable code. The user/administrator of the a client system may remotely manage the respective device via a user interface displayed on an administration device (e.g., mobile phone). Such management may include, for instance, setting operational parameters (a desired home temperature, a parental control setting, etc.), applying software updates, and troubleshooting.

Some embodiments of the present invention are specifically crafted for ease of use, so as to not necessitate specialized knowledge of computer engineering or network administration. For instance, upon installation, network regulator may automatically take over some network services from an existing router, to become the default provider of Internet access for the local network.

It will be clear to a skilled artisan that the above embodiments may be altered in many ways without departing from the scope of the invention. Accordingly, the scope of the invention should be determined by the following claims.

## Claims

1. A network regulator **[18]** connected to a plurality of client systems **[12a-f]** over a local network **[14],** wherein a router **[19]** provides a network service comprising assigning network addresses to the plurality of client systems **[12a-f],** the network regulator **[18]** comprising a hardware processor and a memory, the hardware processor is configured to:
in response to receiving a set of security settings from a remote configuration server **[52],** configure the network regulator **[18]** according to the security settings, wherein configuring the network regulator **[18]** according to the security settings causes the network regulator **[18]** to protect the plurality of client systems **[12a-f]** against computer security threats; **characterized in that**
in response to connecting to the router **[19]** over the local network **[14],** set up a tunnel connecting the network regulator **[18]** to the remote configuration server **[52],** wherein setting up the tunnel comprises configuring the network regulator **[18]** to redirect to the router **[19]** a communication received via the tunnel, the communication configured to cause a disruption of the network service; and
in response to the disruption, take over the network service from the router **[19].**

2. The network regulator **[18]** of claim 1, wherein the disruption of the network service comprises incapacitating the router **[19].**

3. The network regulator **[18]** of claim 1, wherein the communication comprises a set of instructions which, when executed by the router **[19],** cause the disruption of the network service.

4. The network regulator **[18]** of claim 1, wherein the communication comprises a request to expose a configuration interface of the router **[19].**

5. The network regulator **[18]** of claim 1, wherein the communication is configured to automatically fill in a set of fields of a configuration interface of the router **[19]** with a set of values, the set of values selected to cause the disruption of the network service.

6. The network regulator **[18]** of claim 1, wherein the communication comprises a set of user credentials for logging into a configuration interface of the router **[19].**

7. The network regulator **[18]** of claim 1, wherein the configuration server **[52]** is configured, in preparation for transmitting the communication, to:
acquire via the tunnel a set of device type data indicative of a device type of the router **[19];** and
in response to acquiring the set of device type data, configure the communication according to the device type of the router **[19].**

8. The network regulator **[18]** of claim 1, wherein the configuration server **[52]** is configured to determine a device type of the router **[19]** according to a response to the communication.

9. The network regulator **[18]** of claim 1, wherein the hardware processor is further **characterized by** being configured, in response to taking over the network service, to:
receive a tunnel request from the configuration server **[52],** the tunnel request indicating a target client system **[12]** of the plurality of client systems **[12a-f];** and
in response to receiving the tunnel request, set up a second tunnel connecting the network regulator **[18]** to the configuration server **[52],** wherein setting up the second tunnel comprises configuring the network regulator **[18]** to redirect to the target client system **[12]** a second communication received via the second tunnel from the configuration server **[52].**

10. The network regulator **[18]** of claim 9, wherein the second communication comprises an agent installer configured to install a utility agent on the target client system **[12].**

11. The network regulator **[18]** of claim 9, wherein the second communication comprises a set of parameter values for adjusting a set of operational parameters of the target client system **[12].**

12. The network regulator **[18]** of claim 9, wherein the configuration server **[52]** is configured, in preparation for transmitting the second communication, to:
acquire via the second tunnel a set of device type data indicative of a device type of the target client system **[12];** and
in response to acquiring the set of device type data, configure the second communication according to the device type of the target client system **[12].**

13. The network regulator **[18]** of claim 1, wherein protecting the plurality of client systems **[12a-f]** against computer security threats comprises redirecting a request to access a resource to a remote security server **[50]**, the request received from a client system **[12]** of the plurality of client systems **[12a-f],** wherein the security server **[50]** is configured to determine whether granting access to the resource exposes the client system **[12]** to a computer security threat.

14. The network regulator **[18]** of claim 1, wherein the tunnel is set up according to a secure shell (SSH) protocol.

15. A non-transitory computer-readable medium storing instructions which,
when executed by at least one hardware processor of a network regulator **[18],** wherein the network regulator is connected to a plurality of client systems over a local network and wherein a router provides a network service comprising assigning network addresses to the plurality of client systems, cause the network regulator **[18]** to:
in response to receiving a set of security settings from a remote configuration server **[52],** configure the network regulator **[18]** according to the security settings, wherein configuring the network regulator **[18]** according to the security settings causes the network regulator **[18]** to protect a plurality of client systems **[12q-f]** against computer security threats,
**characterized by** in response to connecting to the router **[19]** over the local network **[14],** set up a tunnel connecting the network regulator **[18]** to the remote configuration server **[52],** wherein setting up the tunnel comprises configuring the network regulator **[18]** to redirect to the router **[19]** a communication received via the tunnel from the configuration server **[52],** the communication configured to cause a disruption of the network service; and
in response to the disruption, take over the network service from the router **[19].**

16. A method, performed by a network regulator [18], of protecting a plurality of client systems **[12a-f]** against computer security threats, the plurality of client systems **[12a-f]** connected to a local network **[14],** wherein a router **[19]** connected to the local network **[14]** performs a network service comprising assigning network addresses to the plurality of client systems **[12a-f],** the method comprising:
in response to receiving a set of security settings from a remote configuration server **[52],** configuring the network regulator **[18]** according to the security settings, wherein configuring the network regulator **[18]** according to the security settings causes the network regulator **[18]** to protect the plurality of client systems **[12a-f]** against computer security threats; **characterized by**
in response to connecting to the router **[18]** over the local network **[14],** employing the network regulator **[18]** to set up a tunnel connecting the network regulator **[18]** to the remote configuration server **[52],** wherein setting up the tunnel comprises configuring the network regulator **[18]** to redirect to the router **[19]** a communication received via the tunnel from the configuration server **[52],** the communication configured to cause a disruption of the network service; and
in response to the disruption, employing the network regulator **[18]** to take over the network service from the router **[19].**

17. The network regulator **[18]** of claim 1, wherein taking over the network service from the router **[19]** comprises that the network regulator is further configured to install itself as a gateway between the local network and an extended network, being outside of the local network, wherein at least a part of network traffic between the client system [12] and the extended network [14] traverses the network regulator [18].

## Patentansprüche

1. Netzwerkregler **[18],** der über ein lokales Netzwerk **[14]** mit einer Vielzahl von Kundensystemen **[12a-f]** verbunden ist, wobei ein Router **[19]** einen Netzwerkdienst bereitstellt, der das Zuweisen von Netzwerkadressen an die Vielzahl von Kundensystemen **[12a-f]** umfasst, wobei der Netzwerkregler **[18]** einen Hardwareprozessor und einen Speicher umfasst, wobei der Hardwareprozessor konfiguriert ist, um:
den Netzwerkregler **[18]** gemäß den Sicherheitseinstellungen zu konfigurieren, wobei das Konfigurieren des Netzwerkreglers **[18]** gemäß den Sicherheitseinstellungen den Netzwerkregler **[18]** veranlasst, die Vielzahl von Kundensystemen **[12a-f]** vor Bedrohungen für die Computersicherheit zu schützen, **gekennzeichnet durch**,
das Einrichten eines Tunnels, als Reaktion auf die Verbindung mit dem Router **[19]** über das lokale Netzwerk **[14],**
der den Netzwerkregler **[18]** mit dem Remote-Konfigurationsserver **[52]** verbindet, wobei das Einrichten des Tunnels das Konfigurieren des Netzwerkreglers **[18]** umfasst um eine über den Tunnel empfangene Mitteilung an den Router **[19]** umzuleiten, wobei die Mitteilung derart konfiguriert ist, dass sie eine Unterbrechung des Netzwerkdienstes verursacht; und durch die Übernahme des Netzwerkdienstes vom Router **[19],** als Reaktion auf die Störung.

2. Netzwerkregler **[18]** nach Anspruch 1, wobei die Unterbrechung des Netzwerkdienstes die Deaktivierung des Routers **[19]** umfasst.

3. Netzwerkregler **[18]** nach Anspruch 1, wobei die Mitteilung einen Satz von Anweisungen umfasst, die, wenn sie vom Router **[19]** ausgeführt werden, die Unterbrechung des Netzwerkdienstes bewirken.

4. Netzwerkregler **[18]** nach Anspruch 1, wobei die Mitteilung eine Anforderung zum Freilegen einer Konfigurationsschnittstelle des Routers **[19]** umfasst.

5. Netzwerkregler **[18]** nach Anspruch 1, wobei die Mitteilung derart konfiguriert ist, um einen Satz von Feldern einer Konfigurationsschnittstelle des Routers **[19]** automatisch mit einem Satz von Werten auszufüllen, wobei der Satz von Werten ausgewählt ist, um die Unterbrechung des Netzdienstes zu bewirken.

6. Netzwerkregler **[18]** nach Anspruch 1, wobei die Mitteilung einen Satz von Benutzeranmeldeinformationen zum Anmelden an einer Konfigurationsschnittstelle des Routers **[19]** umfasst.

7. Netzwerkregler **[18]** nach Anspruch 1, wobei der Konfigurationsserver **[52]** zur Vorbereitung der Übertragung der Mitteilung konfiguriert ist, um:
über den Tunnel einen Satz von Gerätetypdaten zu erfassen, die einen Gerätetyp des Routers **[19]** anzeigen; und
als Reaktion auf die Erfassung des Satzes von Gerätetypdaten, die Mitteilung entsprechend dem Gerätetyp des Routers **[19],** zu konfigurieren.

8. Netzwerkregler **[18]** nach Anspruch 1, wobei der Konfigurationsserver **[52]** konfiguriert ist, um einen Gerätetyp des Routers **[19]** gemäß einer Reaktion auf die Mitteilung zu bestimmen.

9. Netzwerkregler **[18]** nach Anspruch 1, wobei der Hardwareprozessor ferner **dadurch gekennzeichnet ist, dass** er als Reaktion auf die Übernahme des Netzwerkdienstes konfiguriert ist, um:
eine Tunnelanforderung von dem Konfigurationsserver **[52]** zu empfangen, wobei die Tunnelanforderung ein Ziel-Kundensystem **[12]** aus der Vielzahl von Kunden-Systemen **[12a-f]** angibt; und
als Reaktion auf den Empfang der Tunnelanforderung einen zweiten Tunnel einzurichten, der den Netzwerkregler **[18]** mit dem Konfigurationsserver **[52]** verbindet, wobei das Einrichten des zweiten Tunnels das Konfigurieren des Netzwerkreglers **[18]** umfasst, um eine zweite Mitteilung, die über den zweiten Tunnel von dem Konfigurationsserver empfangen wird **[52],** auf das Ziel-Kundensystem **[12]** umzuleiten.

10. Netzwerkregler **[18]** nach Anspruch 9, wobei die zweite Mitteilung ein Agent-Installationsprogramm umfasst, das zum Installieren eines Dienstprogrammagenten auf dem Ziel-Kundensystem **[12]** konfiguriert ist.

11. Netzwerkregler **[18]** nach Anspruch 9, wobei die zweite Mitteilung einen Satz von Parameterwerten zum Anpassen eines Satzes von Betriebsparametern des Ziel-Kundensystems **[12]** umfasst.

12. Netzwerkregler **[18]** nach Anspruch 9, wobei der Konfigurationsserver **[52]** zur Vorbereitung der Übertragung der zweiten Mitteilung konfiguriert ist, um:
einen Satz von Gerätetypdaten über den zweiten Tunnel **[12]** zu erfassen, die einen Gerätetyp des Ziel-Kundensystems angeben; und
als Reaktion auf das Erfassen des Satzes von Gerätetypdaten die zweite Mitteilung gemäß dem Gerätetyp des Ziel-Kundensystems **[12]** zu konfigurieren.

13. Netzwerkregler **[18]** nach Anspruch 1, wobei das Schützen der Vielzahl von Kundensystemen **[12a-f]** vor Bedrohungen für die Computersicherheit das Umleiten einer Anforderung zum Zugriff auf eine Ressource an einen entfernten Sicherheitsserver **[50]** umfasst, wobei die Anforderung von einen Kundensystem **[12]** aus der Vielzahl von Kunden-Systemen **[12a-f]** empfangen wird, wobei der Sicherheitsserver **[50]** konfiguriert ist, um zu ermitteln, ob das Gewähren eines Zugriffs auf die Ressource das Kundensystem **[12]** einer Bedrohung für die Computersicherheit aussetzt.

14. Netzwerkregler **[18]** nach Anspruch 1, wobei der Tunnel gemäß einem Secure Shell [SSH] -Protokoll eingerichtet ist.

15. Nichtflüchtiges computerlesbares Medium, das Anweisungen speichert, die, wenn sie von mindestens einem Hardwareprozessor eines Netzwerkreglers **[18]** ausgeführt werden, - wobei der Netzwerkregler über ein lokales Netzwerk mit einer Vielzahl von Kundensystemen verbunden ist und wobei ein Router einen Netzwerkdienst bereitstellt, der das Zuweisen von Netzwerkadressen an die Vielzahl von Kundensystemen umfasst, - den Netzwerkregler **[18]** veranlassen,
als Reaktion auf den Empfang eines Satzes von Sicherheitseinstellungen von einem Remote-Konfigurationsserver **[52],**
den Netzwerkregler **[18]** gemäß den Sicherheitseinstellungen zu konfigurieren, wobei das Konfigurieren des Netzwerkreglers **[18]** gemäß den Sicherheitseinstellungen den Netzwerkregler **[18]** veranlasst, die Vielzahl von Kundensystemen **[12a-f]** vor Bedrohungen für die Computersicherheit zu schützen, **gekennzeichnet durch**,
das Einrichten eines Tunnels, als Reaktion auf die Verbindung mit dem Router **[19]** über das lokale Netzwerk **[14],**
der den Netzwerkregler **[18]** mit dem Remote-Konfigurationsserver **[52]** verbindet, wobei das Einrichten des Tunnels das Konfigurieren des Netzwerkreglers **[18]** umfasst um eine über den Tunnel empfangene Mitteilung an den Router **[19]** umzuleiten, wobei die Mitteilung derart konfiguriert ist, dass sie
eine Unterbrechung des Netzwerkdienstes verursacht; und durch die Übernahme des Netzwerkdienstes vom Router **[19],** als Reaktion auf die Störung.

16. Verfahren, das von einem Netzwerkregler **[18]** ausgeführt wird, um eine Vielzahl von Kundensystemen **[12a-f]** vor Bedrohungen für die Computersicherheit zu schützen, wobei die Vielzahl von Kundensystemen **[12a-f]** mit einem lokalen Netzwerk **[14]** verbunden ist, wobei ein mit dem lokalen Netzwerk **[14]** verbundener Router **[19]** einen Netzwerkdienst durchführt, der das Zuweisen von Netzwerkadressen zu der Vielzahl von Kundensystemen **[12a-f]** umfasst, wobei das Verfahren Folgendes umfasst:
als Reaktion auf das Empfangen eines Satzes von Sicherheitseinstellungen von einem Remote-Konfigurationsserver **[52],** den Netzwerkregler **[18]** gemäß den Sicherheitseinstellungen zu konfigurieren, wobei das Konfigurieren des Netzwerkreglers **[18]** gemäß den Sicherheitseinstellungen den Netzwerkregler **[18]** veranlasst, die Vielzahl von Kundensystemen **[12a-f]** vor Bedrohungen für die Computersicherheit zu schützen; **gekennzeichnet durch** das Verwenden des Netzwerkreglers **[18],** als Reaktion auf das Herstellen einer Verbindung mit dem Router **[18]** über das lokale Netzwerk **[14]** zum Einrichten eines Tunnels, der den Netzwerkregler **[18]** mit dem Remote-Konfigurationsserver **[52]** verbindet, wobei das Einrichten des Tunnels das Konfigurieren des Netzwerkreglers **[18]** umfasst, um eine von dem Konfigurationsserver **[52]** über den Tunnel empfangene Mitteilung an den Router **[19]** umzuleiten, wobei die Mitteilung derart konfiguriert ist, dass sie eine Unterbrechung des Netzwerkdienstes bewirkt; und
als Reaktion auf die Unterbrechung, den Einsatz des Netzwerkreglers **[18]** um den Netzwerkdienst vom Router zu übernehmen **[19].**

17. Netzwerkregler **[18]** nach Anspruch 1, wobei das Übernehmen des Netzwerkdienstes vom Router **[19]** umfasst, dass der Netzwerkregler ferner derart konfiguriert ist, dass er sich selbst als Gateway zwischen dem lokalen Netzwerk und einem erweiterten Netzwerk installiert, indem er sich außerhalb des lokalen Netzwerks befindet, wobei mindestens ein Teil des Netzwerkverkehrs zwischen dem Kundensystem **[12]** und dem erweiterten Netzwerk **[14]** durch den Netzwerkregler **[18]** erfolgt.

## Revendications

1. Régulateur de réseau **[18]** connecté à une pluralité de systèmes clients **[12a-f]** sur un réseau local **[14],** dans lequel un routeur **[19]** fournit un service réseau comprenant l'attribution d'adresses réseau à la pluralité de systèmes clients **[12a -f],** le régulateur de réseau **[18]** comprenant un processeur matériel et une mémoire, le processeur matériel est configuré pour :
en réponse à la réception d'un ensemble de paramètres de sécurité d'un serveur **[52]** de configuration à distance, configurer le régulateur de réseau **[18]** en fonction des paramètres de sécurité, dans lequel la configuration du régulateur de réseau **[18]** en fonction des paramètres de sécurité amène le régulateur de réseau [**18**] pour protéger la pluralité de systèmes clients **[12a-f]** contre les menaces de sécurité informatique; **caractérisé en ce que,**
en réponse à la connexion au routeur **[19]** sur le réseau local **[14],** établir un tunnel reliant le régulateur de réseau **[18]** au serveur de configuration distant **[52],** dans lequel la mise en place du tunnel comprend la configuration du régulateur de réseau **[18]** pour rediriger vers le routeur **[19]** une communication reçue via le tunnel, la communication étant configurée de amener une interruption du service réseau; et en réponse à la l'interruption, prendre en charge le service réseau du routeur [19].

2. Régulateur de réseau **[18]** selon la revendication 1, dans lequel l'interruption du service réseau comprend la désactivation du routeur **[19].**

3. Régulateur de réseau **[18]** selon la revendication 1, dans lequel la communication comprend un ensemble d'instructions qui, lorsqu'elles sont exécutées par le routeur **[19],** amènent l'interruption du service réseau.

4. Régulateur de réseau **[18]** selon la revendication 1, dans lequel la communication comprend une requête pour exposer une interface de configuration du routeur **[19].**

5. Régulateur de réseau **[18]** selon la revendication 1, dans lequel la communication est configurée pour remplir automatiquement un ensemble de champs d'une interface de configuration du routeur **[19]** avec un ensemble de valeurs, l'ensemble de valeurs sélectionné de amener l'interruption du service réseau.

6. Régulateur de réseau **[18]** selon la revendication 1, dans lequel la communication comprend un ensemble d'informations d'identification d'utilisateur pour se connecter à une interface de configuration du routeur **[19].**

7. Régulateur de réseau **[18]** selon la revendication 1, dans lequel le serveur de configuration **[52]** est configuré, en préparation pour transmettre la communication, pour :
acquérir, via le tunnel, un ensemble de données de type de dispositif indicatif d'un type de dispositif du routeur **[19];** et
en réponse à l'acquisition de l'ensemble de données de type de dispositif, configurez la communication en fonction du type de dispositif du routeur **[19].**

8. Régulateur de réseau **[18]** selon la revendication 1, dans lequel le serveur de configuration **[52]** est configuré pour déterminer un type de dispositif du routeur **[19]** en fonction d'une réponse à la communication.

9. Régulateur de réseau **[18]** selon la revendication 1, dans lequel le processeur matériel est en outre **caractérisé en ce qu'**il est configuré, en réponse à la reprise du service réseau, pour:
recevoir une demande de tunnel du serveur de configuration **[52],** la demande de tunnel indiquant un système client cible **[12]** de la pluralité de systèmes clients **[12a-f];** et
en réponse à la réception de la demande de tunnel, établir un deuxième tunnel reliant le régulateur de réseau **[18]** au serveur de configuration **[52],** dans lequel la configuration du deuxième tunnel comprend la configuration du régulateur de réseau [18] pour rediriger vers le système client cible **[12]** une deuxième communication reçue via le deuxième tunnel du serveur de configuration **[52].**

10. Régulateur de réseau **[18]** selon la revendication 9, dans lequel la deuxième communication comprend un installateur d'agent configuré pour installer un agent utilitaire sur le système client cible **[12].**

11. Régulateur de réseau **[18]** selon la revendication 9, dans lequel la deuxième communication comprend un ensemble de valeurs de paramètres pour ajuster un ensemble de paramètres opérationnels du système client cible **[12].**

12. Régulateur de réseau **[18]** selon la revendication 9, dans lequel le serveur de configuration **[52]** est configuré, en préparation pour transmettre la deuxième communication, pour :
acquérir via le deuxième tunnel un ensemble de données de type de dispositif indicatif d'un type de dispositif du système client cible **[12];** et
en réponse à l'acquisition de l'ensemble de données de type de dispositif, configurez la deuxième communication en fonction du type de dispositif du système client cible **[12].**

13. Régulateur de réseau **[18]** selon la revendication 1, dans lequel la protection de la pluralité de systèmes clients **[12a-f]** contre les menaces de sécurité informatique comprend la redirection d'une demande d'accès à une ressource vers un serveur de sécurité distant **[50],** la demande reçue d'un système client **[12]** de la pluralité de systèmes clients [12a-f], dans lequel le serveur de sécurité **[50]** est configuré pour déterminer si l'autorisation de l'accès à la ressource expose le système client **[12]** à une menace de sécurité informatique.

14. Régulateur de réseau **[18]** selon la revendication 1, dans lequel le tunnel est configuré selon un protocole SSH (*Secure Shell*)*.*

15. Support non transitoires, lisibles par ordinateur, de stockage des instructions qui, lorsqu'elles sont exécutées par au moins un processeur matériel d'un régulateur de réseau **[18],** dans lesquelles le régulateur de réseau est connecté à une pluralité de systèmes clients sur un réseau local et dans lequel un routeur fournit un service de réseau comprenant l'attribution d'adresses de réseau à la pluralité de systèmes clients, amenant le régulateur de réseau **[18]** pour:
en réponse à la réception d'un ensemble de paramètres de sécurité d'un serveur de configuration distant **[52],** configurer le régulateur de réseau **[18]** en fonction des paramètres de sécurité, dans lequel la configuration du régulateur de réseau **[18]** en fonction des paramètres de sécurité, de amener le régulateur de réseau [**18**] pour protéger une pluralité de systèmes clients **[12q-f]** contre les menaces de sécurité informatique, **caractérisé en ce que,**
en réponse à la connexion au routeur **[19]** sur le réseau local **[14],** établir un tunnel reliant le régulateur de réseau **[18]** au serveur de configuration **[52],** dans lequel la configuration du tunnel comprend la configuration du régulateur de réseau [18] pour rediriger vers le routeur **[19]** une communication reçue via le tunnel du serveur de configuration **[52],** la communication étant configurée de amener une interruption du service réseau; et
en réponse à l'interruption, prendre en charge le service réseau du routeur **[19].**

16. Procédé réalisé par un régulateur de réseau **[18],** pour protéger une pluralité de systèmes clients **[12a-f]** contre les menaces de sécurité informatique, la pluralité de systèmes clients **[12a-f]** connectés à un réseau local **[14],** dans lequel un routeur **[19]** connecté au réseau local **[14]** effectue un service réseau comprenant l'attribution d'adresses réseau à la pluralité de systèmes clients **[12a-f],** le procédé comprenant :
en réponse à la réception d'un ensemble de paramètres de sécurité d'un serveur de configuration distant **[52],** la configuration du régulateur de réseau **[18]** en fonction des paramètres de sécurité, dans lequel la configuration du régulateur de réseau **[18]** en fonction des paramètres de sécurité amène le régulateur de réseau **[18]** pour protéger la pluralité de systèmes clients **[12a-f]** contre les menaces de sécurité informatique; **caractérisé en ce que,**
en réponse à la connexion au routeur **[18]** sur le réseau local **[14],** l'utilisation du régulateur de réseau **[18]** pour établir un tunnel reliant le régulateur de réseau **[18]** au serveur de configuration distant **[52],** dans lequel la configuration du le tunnel comprend la configuration du régulateur de réseau **[18]** pour rediriger vers le routeur [19] une communication reçue via le tunnel du serveur de configuration **[52],** la communication étant configurée de amener une interruption du service réseau; et
en réponse à la perturbation, l'utilisation du régulateur de réseau **[18]** pour prendre en charge le service réseau du routeur **[19].**

17. Régulateur de réseau **[18]** selon la revendication 1, dans lequel la prise en charge du service réseau par le routeur **[19]** comprend que le régulateur de réseau est en outre configuré pour s'installer en tant que passerelle entre le réseau local et un réseau étendu, étant en dehors du réseau local, dans lequel au moins une partie du trafic réseau entre le système client **[12]** et le réseau étendu **[14]** traverse le régulateur de réseau **[18].**
